# EUROPÄISCHE PATENTSCHRIFT

(11) **EP 1 377 592 B1**
(45) Veröffentlichungstag und Bekanntmachung des Hinweises auf die Patenterteilung: **15.07.2009**
(21) Anmeldenummer: 02711871.0
(22) Anmeldetag: 15.02.2002
(51) Int. Cl.: C07F 5/04

(54) **VERFAHREN ZUR HERSTELLUNG VON HYDROGEN-BIS(CHELATO)BORATEN UND ALKALIMETALL-BIS(CHELATO)BORATEN**
METHOD FOR THE PRODUCTION OF HYDROGEN BIS(CHELATO)BORATES AND ALKALI METAL BIS(CHELATO)BORATES
PROCEDE DE PRODUCTION DE BIS(CHELATO)BORATES D'HYDROGENE ET DE BIS(CHELATO)BORATES DE METAUX ALCALINS

(30) Priorität: 22.02.2001 DE 10108608
(43) Veröffentlichungstag der Anmeldung: 07.01.2004
(73) Patentinhaber: Chemetall GmbH, 60487 Frankfurt (DE)
(72) Erfinder: WIETELMANN, Ulrich, 61381 Friedrichsdorf (DE); LISCHKA, Uwe, 60437 Niedereschbach (DE); SCHADE, Klaus, 65205 Wiesbaden (DE); PANITZ, Jan-Christoph, 60487 Frankfurt (DE)
(74) Vertreter: Uppena, Franz
(86) Internationale Anmeldenummer: PCT/EP2002/001640
(87) Internationale Veröffentlichungsnummer: WO 2002/068433

(56) Entgegenhaltungen:
- EP-A- 0 784 042
- EP-A- 1 106 617
- WO-A-01/99209
- DE-C- 19 829 030
- DATABASE CA [Online] CHEMICAL ABSTRACTS SERVICE, COLUMBUS, OHIO, US; BESSLER, EBERHARD ET AL: "Boron complexes with dicarboxylic acids: bis(oxalato)borates and bis(malonato)borates" retrieved from STN Database accession no. 97:137689 XP002197895 & Z. NATURFORSCH., B: ANORG. CHEM., ORG. CHEM. (1982), 37B(8), 1020-5 ,
- LAMANDE L ET AL: "STRUCTURE ET ACIDITE DE COMPOSES A ATOME DE BORE ET DE PHOSPHORE HYPERCOORDONNES" JOURNAL OF ORGANOMETALLIC CHEMISTRY, ELSEVIER-SEQUOIA S.A. LAUSANNE, CH, Bd. 329, Nr. 1, 28. Juli 1987 (1987-07-28), Seiten 1-29, XP002028083 ISSN: 0022-328X in der Anmeldung erwähnt
- XU, WU ET AL: "LiBOB and its derivatives. Weakly coordinating anions, and the exceptiona conductivity of their nonaqueous solutions" ELECTROCHEMICAL AND SOLID-STATE LETTERS (2001), 4(1), E1-E4 , XP002197850
- DATABASE CA [Online] CHEMICAL ABSTRACTS SERVICE, COLUMBUS, OHIO, US; TSUJIOKA, SHOICHI ET AL: "Preparation of lithium bis(oxalato)borate as ionic metal complex" retrieved from STN Database accession no. 135:326630 XP002197896 & JP 2001 302675 A (CENTRAL GLASS CO., LTD., JAPAN) 31. Oktober 2001 (2001-10-31)
- DATABASE CA [Online] CHEMICAL ABSTRACTS SERVICE, COLUMBUS, OHIO, US; TSUJIOKA, SHOICHI ET AL: "Electrolyte for electrochemical device, electrolyte solution, and battery" retrieved from STN Database accession no. 136:9009 XP002197897 & JP 2001 325989 A (CENTRAL GLASS CO., LTD., JAPAN) 22. November 2001 (2001-11-22)

## Beschreibung

Die Erfindung betrifft Verfahren zur Herstellung von Hydrogen-bis(chelato)-boraten und Alkalimetall-bis(chelato)boraten (auch Spiroborate genannt).

Hydrogen-bis(chelato)borate H[BL¹L²] sind starke Protonensäuren. Dabei ist L¹ = -OC(O)-(CR¹R²)ₙ-C(O)O- oder -OC(O)-(CR³R⁴)-O-
mit n = 0 oder 1,
R¹, R², R³, R⁴ = unabhängig voneinander H, Alkyl, Aryl oder Silyl, L² = -OC(O)-(CR⁵R⁶)ₙ-C(O)O- oder -OC(O)-(CR⁷R⁸)-O-
mit n = 0 oder 1,
R⁵, R⁶, R⁷, R⁸ = unabhängig voneinander H, Alkyl, Aryl oder Silyl,
wobei bei den bisher bekannten Hydrogen-bis(chelato)boraten L¹ = L² ist, d. h. es gilt R¹ = R⁵, R² = R⁶, R³ = R⁷ und R⁴ = R⁸.

Für Hydrogen-bis(oxalato)borat H[B(C₂O₄)₂] wurde beispielsweise im Lösungsmittel DMSO ein pKₐ-Wert von -0,2 gefunden, der etwa der Säurestärke von konz. Schwefelsäure entspricht (L. Lamandé, D. Boyer u. A. Munoz, J. Organomet. Chem. 329 (1987) 1-29). Hydrogen-bis(chelato)-borate können deshalb als kationische Katalysatoren in der organischen Synthese und in der Polymerchemie eingesetzt werden.

So dient Hydrogen-bis(oxalato)borat beispielsweise zur selektiven Kondensation von 2,3,5-Trimethylhydrochinon mit Isophytol zum D,L-α-Tocopherol (US 5,886,196).

Die DE OS 1595667 beschreibt den Einsatz von Borsäureestern, hergestellt aus Tetrahydroxyborsäure und aliphatischen oder aromatischen Mono- oder Dicarbonsäuren zur Herstellung von Polyestern.

Lithiumsalze der Hydrogen-bis(chelato)borate können, da sie elektrochemisch stabil sind, als Leitsalze in Elektrolyten für Lithiumbatterien eingesetzt werden. So werden in der DE 19829030 Lösungen von Lithium-bis(oxalato)borat in aprotischen Lösungsmitten zur Verwendung als Elektrolyt in Lithiumionenbatterien vorgeschlagen.

Hydrogen-bis(chelato)borate werden im allgemeinen durch azeotrope Entfernung von Wasser aus Gemischen von Dicarbonsäuren und Borsäure oder Boroxid in einem zur Azeotropierung geeigneten Lösungsmittel wie Benzol, Toluol oder Xylol dargestellt (Gmelins Handbuch der Anorgan. Chemie, Borverbindungen, Teil 33/8, 1976, S. 118 , S. 128-129 u. S. 138; 4. Erg.werk, Band 2, 1993, S. 217-219; Erg.werk zur 3. Aufl., Band 44, Teil 13, S 47) (L = Ligand, z.B. L¹):

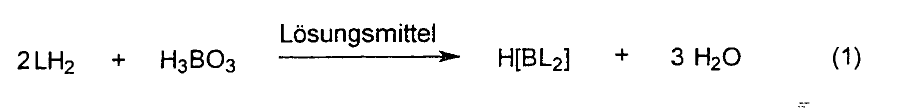

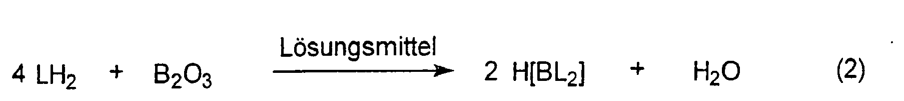

So wird beispielsweise Hydrogen-bis(oxalato)borat durch sechsstündiges Refluxieren einer Suspension von Oxalsäure und Boroxid in Toluol und Entfernen des gebildeten Wassers mit Hilfe eines Wasserabscheiders in 70 %-iger Ausbeute erhalten (US 5,886,196). In derselben Schrift wird angegeben, dass statt Boroxid auch Trimethylboroxin oder Trimethylborat verwendet werden kann. In diesem Fall wird nicht Wasser, sondern Methanol als Nebenprodukt entfernt:

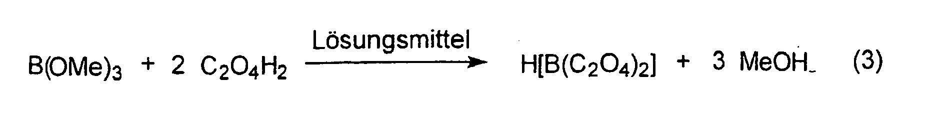

In nichtwässrigen Lösungsmitteln mit hoher Dielektrizitätskonstante wie z.B. Dimethylformamid reagiert Oxalsäure mit Borsäure in homogener Phase unter Bildung des Spiroborat-1:2-Adduktes. Daraus können die wasserfreien festen Salze durch Eindampfung erhalten werden (L. Lamandé, s.o.).

In wässriger Lösung liegen die Komponenten Borsäure und Ligand LH₂ in einem von den jeweiligen Komplexbildungskonstanten abhängigen Gleichgewicht vor:

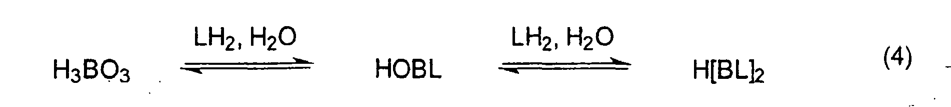

Im allgemeinen können die Bis-(chelato)komplexe H[BL₂] aus wässrigen Lösungen nicht direkt in reiner Form isoliert werden, da das Gleichgewicht (4) eher auf der linken Seite liegt. Demzufolge kristallisieren bei der Abkühlung oder Aufkonzentrierung wässriger Lösungen, die zwei Teile LH₂ und ein Teil Borkomponente wie z.B. H₃BO₃ aufweisen, in der Regel 1:1-Komplexe aus (E. Bessler u. J. Weidlein, Z. Naturforsch., 37b, 1020-1025, 1982).

Allen beschriebenen Herstellverfahren ist gemeinsam, dass sie ein organisches Lösungsmittel erfordern. Bei einer technischen Synthese sind deshalb Maßnahmen zur sicheren Handhabung von Lösungsmitteln (Brennbarkeit, Giftigkeit von Aromaten wie z.B. Benzol) erforderlich. Außerdem ist die Raum/Zeit-Ausbeute wegen der mit dem Lösungsmitteleinsatz einhergehenden Verdünnung vergleichsweise gering.

Alkalimetallsalze M[BL₂] (M = Li, Na, K, Rb, Cs) der Hydrogen-bis(chelato)-borate können entweder durch Neutralisation vorher isolierter Säure H[BL₂] mit basischen Alkalimetallverbindungen, wie M₂CO₃, MOH, MH etc., oder - vorteilhafter - direkt ausgehend von den Liganden H₂L, einer Borkomponente und einer basischen Alkalimetallverbindung erhalten werden.

Die gebräuchlichste Methode besteht - in Analogie zu den oben aufgeführten Reaktionen (1) und (2) - darin, die Komponenten in einem Lösungsmittel zu suspendieren und das Wasser azeotrop abzuscheiden (Bessler, Weidlein, s.o.):

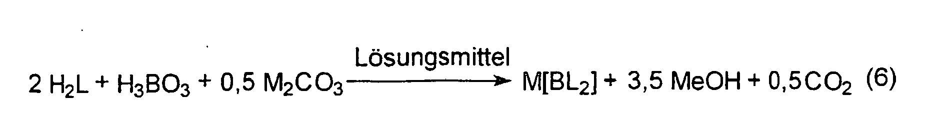

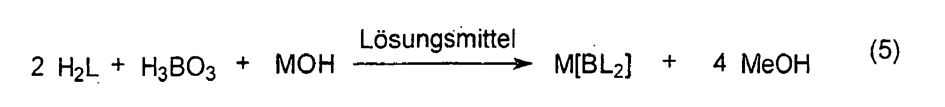

Als Lösungsmittel eigenen sich solche, die mit Wasser ein Azeotrop bilden, also z.B. Benzol, Toluol, Xylol.

In einer Variante kann das Alkalimetall auch über das Salz des Liganden (MHL oder M₂L) oder ein Metallborat (z.B. MBO₂) eingebracht werden:

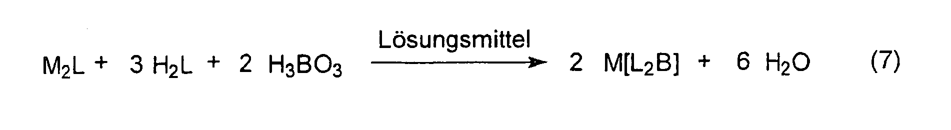

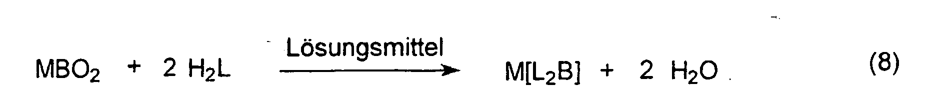

Eine weitere Herstellmöglichkeit besteht in der Umsetzung von Metalltetraalkoxyborat M[B(OR)₄] mit 2 Äquivalenten des Liganden (DE 19829030), z. B.:

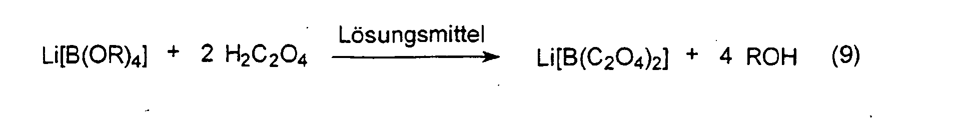

Als Lösungsmittel kann der Alkohol selbst (Methanol, Ethanol) oder ein aprotisches, polares Solvenz wie z. B. Acetonitril, Verwendung finden.

Weiterhin ist die Synthese ausgehend von Metalltetrahydridoboraten MBH₄ und 2 Äquivalenten des Liganden in einem Lösungsmittel, in welchem das Metalltetrahydridoborat eine gewisse Löslichkeit aufweist (z. B. THF oder 1,2-Dimethoxyethan), bekannt (DE 19829030), z. B.:

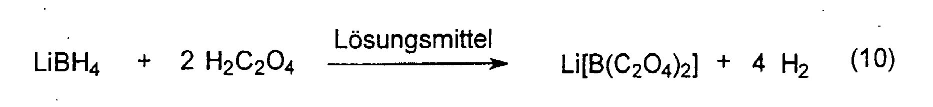

Allen oben aufgeführten Verfahren zur Darstellung von M[BL₂]-Verbindungen ist gemein, dass sie organische Lösungsmittel erfordern und in entsprechender Verdünnung ablaufen. Die Raum/Zeit-Ausbeute ist demzufolge relativ niedrig.

Es ist schließlich bekannt, Lithium-bis(oxalato)borat in homogener wässriger Lösung durch Umsetzung gem. (5), (6), (7) oder (8) herzustellen und es nach Totaleindampfung und Vakuumtrocknung in fester, wasserfreier Form zu isolieren. Der Nachteil dieses Verfahrens besteht darin, dass die Raum/ZeitAusbeute relativ gering ist. So werden in der DE 19829030 aus ca. 3,1 kg Reaktionslösung nur 185 g Produkt erhalten (Beispiel 1). Die für eine homogene Auflösung der Reaktionskomponenten benötigte Wassermenge muss mit hohem Energieaufwand verdampft werden.

Aufgabe der vorliegenden Erfindung ist es demzufolge, ein Verfahren aufzuzeigen, das die Nachteile des Standes der Technik vermeidet und insbesondere
- ohne Einsatz organischer Lösungsmittel und
- mit höchstmöglichen Raum/Zeit-Ausbeuten
die gewünschten Spiroboratverbindungen in guten chemischen Ausbeuten liefert.

Die Aufgabe wird durch die in den unabhängigen Ansprüchen 1, 5, 9 und 12 angegebenen Verfahren gelöst. Dabei werden die gewünschten Liganden L¹ 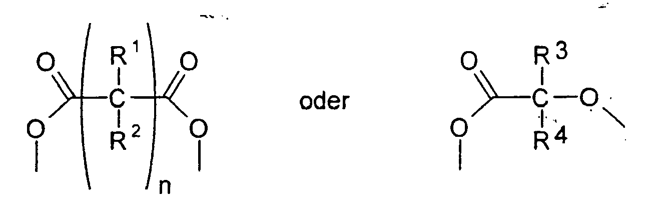 mit n = 0 oder 1,
R¹, R², R³, R⁴ = unabhängig voneinander H, Alkyl, Aryl oder Silyl,
wobei die Alkylgruppen bevorzugt 1 bis 10 C-Atome enthalten, die Arylgruppen bevorzugt Monoarylgruppen sind, die auch substituiert sein können, und die Silylgruppen bevorzugt Trialkylsilylgruppen sind, bei denen die Alkylgruppen jeweils 1 bis 4 C-Atome enthalten,
und gegebenenfalls L² in protonierter Form (H₂L¹ und H₂L²) mit einer oxidischen Borverbindung und gegebenenfalls einem Alkalimetallrohstoff in fester Form ohne den Zusatz von Lösungsmitteln
gemischt und durch z. B. Rühren und/oder Erhitzen zur Reaktion gebracht,
wobei das Molverhältnis der Summe der eingesetzten Liganden L¹ und L² zum eingesetzten Bor bevorzugt 2 : 1 beträgt. Kleinere Abweichungen von der theoretischen Stöchiometrie (z. B. 10 % nach oben oder unten) sind möglich, ohne dass starke Auswirkungen auf das jeweilige Produkt auftreten.

Es wurde überraschend gefunden, dass sich die Verfahrensprodukte (Spiroboratverbindungen) bei dieser weitgehend heterogenen Versuchsführung mit guter Ausbeute und Reinheit bilden. Es erwies sich also als unnötig, ein Lösungsmittel zuzugeben und die jeweiligen Reaktionskomponenten homogen zu lösen, dann zu mischen und das Endprodukt zu isolieren. Das sich bei der Reaktion bildende Wasser und das eventuell mit den Rohstoffen (Ausgangsstoffen) eingebrachte Wasser (Kristallwasser) reicht zur Reaktionsführung vollständig aus. Die Reaktion zwischen den in der Regel festen Stoffen setzt teilweise bereits bei Raumtemperatur ein und wird durch das Entfernen des vorhandenen, bzw. gebildeten Wassers vervollständigt.

In einer bevorzugten Ausgestaltung der Erfindung können zusätzlich kleine Wassermengen zugesetzt werden, um beispielsweise die Wärmeleitfähigkeit zu verbessern oder der Staubbildung vorzubeugen. Die Zugabemenge des Wassers ist so zu bemessen, dass der Gesamtwassergehalt der Synthesemischung (das ist die Summe der mit den Rohstoffen eingebrachten Wassermenge (z. B. Hydratwasser, anhaftende Feuchtigkeit), der Reaktionswassermenge und der zugegebenen Wassermenge) 50 Gew.-% nicht überschreitet und besonders bevorzugt zwischen 5 und 45 Gew.-% liegt.

Die Entfernung des Wassers geschieht bevorzugt destillativ bei erhöhten Temperaturen, besonders bevorzugt bei vermindertem Druck. Die Druck- und Temperaturbedingungen sind von den spezifischen Eigenschaften der eingesetzten Rohstoffe und Produkte abhängig. Bevorzugte Trocknungstemperaturen liegen zwischen 80 und 180 °C.

Als Liganden L¹ und/oder L² werden bevorzugt der Oxalatrest, der Malonsäurerest, Glykolsäure und/oder Milchsäure verwendet.

Als oxidische Borverbindung wird bevorzugt ein Boroxid, besonders bevorzugt B₂O₃, oder eine Borsäure, besonders bevorzugt H₃BO₃ oder HBO₂ eingesetzt.

Bevorzugt wird für den im unabhängigen Anspruch 5 angegebenen oxidischen Alkalimetallrohstoff ein Alkalimetallcarbonat, Alkalimetallhydrogencarbonat, Alkalimetallhydroxid oder Alkalimetalloxid verwendet. Besonders bevorzugt sind Lithiumcarbonat und Lithiumhydroxid.

Das erfindungsgemäße Verfahren kann beispielhaft wie folgt durchgeführt werden:

Die berechneten stöchiometrischen Mengen der Rohstoffe werden zunächst bei Raumtemperatur mechanisch gemischt. Die Vermischung kann auch bei höheren, z. B. 50 bis 100 °C, oder tieferen Temperaturen, z. B. 0 °C erfolgen; einen positiven Effekt auf den Reaktionsverlauf hat dies jedoch nicht.

Die Vermischung kann - in Abhängigkeit von den zur Verfügung stehenden Apparaten und dem Reaktionsmaßstab - z. B. durch Einwägen in einen Glaskolben und Vermischen mit einem Rührstab oder durch Bewegung des Kolbens (z. B. Rotationsverdampfer) erfolgen. In einigen Fällen empfiehlt es sich auch, die festen Komponenten einzeln oder in der Mischung zu vermahlen, beispielsweise in einem Labormörser oder in einer Scheiben- oder Stabschwingmühle.

Besonders vorteilhaft erfolgt die Vermischung in einem mit einem langsam laufenden Rührer versehenen Mischer oder einem Schaufelmischer.

Bevorzugt werden zunächst die sauren Komponenten, d. h. die Borverbindung und der Ligand vorgelegt und gemischt. Danach wird die gegebenenfalls benötigte basische Metallverbindung zügig, aber - dies gilt vor allem für den größeren Maßstab - bevorzugt portionsweise zugegeben. Die Umsetzung mit der Metallkomponente ist exotherm; zudem entsteht beim Einsatz von M₂CO₃ Kohlendioxidgas, für das eine gefahrlose Entweichungsmöglichkeit vorhanden sein muss.

Beim Einsatz von nur zwei Reaktionskomponenten analog (1), (2) oder (8) ist die Zugabereihenfolge unerheblich.

Nach Vermischung der Komponenten wird das gesamte Wasser destillativ entfernt. Dies geschieht durch Erhöhung der Temperatur und bevorzugt bei vermindertem Druck.

Besonders bevorzugt ist eine Ausführungsform, bei der anfangs bei Normaldruck oder nur mäßig vermindertem Druck (> 200 mbar, bevorzugt > 500 mbar) gearbeitet wird. Durch äußere Beheizung wird das Reaktionsgemisch in diesem Fall auf etwa 90 bis 110 °C (bei Lithium-bis(oxaiafoborat) bis 120 °C) Innentemperatur erhitzt, wobei der überwiegende Wasserinhalt schnell abdestilliert. Erst wenn der größte Teil des Wasserinventars (> ca. 75 %) entfernt ist, wird der Druck allmählich vermindert (bis z. B. < 30 mbar oder tiefer). Die Endtrocknungsbedingungen hängen von der thermischen Stabilität des erhaltenen Spiroborates ab. Im allgemeinen wird zum Schluss bei maximalem Vakuum und einer Produkttemperatur von 100 bis 180 °C (bei Lithium-bis(oxalatoborat) bis 200 °C) solange gemischt, bis Gewichtskonstanz eingetreten ist. Diese Phase kann - je nach Auslegung des Trocknungsaggregates - ca. 0,5 bis 5 Stunden dauern.

Bei Verwendung eines Trocknungsapparates mit ungenügender Durchmischungsintensität (z. B. Rotationsverdampfer) kann es passieren, dass die Reaktionsmasse stark verklumpt oder ganz fest wird. In diesem Fall ist nicht gewährleistet, dass die Synthesereaktion vollständig abläuft. Dann muss die Eindampfung unterbrochen und das Reaktionsgut zerkleinert werden (z. B. mit einem Mörser). Dieser Vorgang erfolgt vorzugsweise zum Ende der ersten Reaktionsphase, d. h. vor der Absenkung des Druckes auf < 200 bis 500 mbar.

Die Verfahrensprodukte fallen im allgemeinen mit Ausbeuten > 95 % an: Sie haben einen niedrigen Wassergehalt (< 0,5 %) und eine Reinheit von > 95%.

Das erfindungsgemäße Verfahren eignet sich insbesondere zur Herstellung von Lithium-bis(oxalato)borat. Diese Verfahrensvariante ist im folgenden beispielhaft beschrieben: Oxalsäure-Dihydrat (oder wasserfreie Oxalsäure) werden mit Borsäure (die bevorzugt gemahlen ist) im molaren Verhältnis (1,98 bis 2,04) : 1 gemischt. Dazu werden pro mol Borsäure 1,01 bis 1,05 mol Lithium in Form einer oxidischen Lithiumverbindung (Lithiumhydroxid, Lithiumhydroxid-Monohydrat oder Lithiumcarbonat) und pro mol Borsäure maximal 2 mol Wasser zugegeben. Das Gemisch wird unter Rühren bei einem Druck von zunächst 500 bis 1000 mbar auf maximal 120 °C erhitzt, wobei die Hauptmenge des Wassers (bevorzugt mindestens 75 % der insgesamt im Reaktionsgemisch vorhandenen Wassermenge) abdestilliert und sich ein feinkristallines, rührfähiges Produkt bildet. Am Ende dieser ersten Trocknungsphase können pro mol eingesetzter Borsäure weitere 0,005 bis 0,04 mol der oxidischen Lithiumverbindung nachdosiert werden.

Die Trocknung (Dauer bevorzugt 2 bis 5 Stunden) wird bei verbessertem Vakuum (1 bis 500 mbar, bevorzugt 1 bis 50 mbar) und Temperaturen von 150 bis 200 °C, bevorzugt 160 bis 180 °C, fortgesetzt, wobei nach Erreichen der Endtemperatur noch mindestens 1 Stunde weitergetrocknet wird. Bei der Wahl der Trocknungstemperatur ist zu beachten, dass Lithium-bis(oxalato)borat thermisch relativ stabil ist und etwas höhere Trocknungstemperaturen als die anderen Alkalimetall-bis(chelato)borate verträgt.

Die Reaktion und die Trocknung werden bevorzugt in einem gegen Oxalsäure korrosionsfesten Trockner vom Typ eines Schaufelradtrockners oder Kneters vorgenommen.

Der Vorteil des erfindungsgemäßen Verfahrens liegt darin, dass kein organisches Lösungsmittel eingesetzt wird, bzw. Wasser nicht oder nur in geringen Mengen zugesetzt wird. Dadurch entfällt der aufwendige Schritt einer Azeotropdestillation, bzw. es müssen nur relativ geringe Mengen Wasser aus dem Reaktionsgemisch entfernt werden. Das erfindungsgemäße Verfahren erweist sich zudem als so vielseitig, dass erstmals auch Borate mit unterschiedlichen Liganden (L¹ ≠ L², wobei das Molverhältnis L₁ : L₂ : B der eingesetzten Stoffe 1 : 1 : 1 beträgt), bzw. Boratgemische (L¹ ≠ L², wobei das Molverhältnis L₁ : L₂ ungleich 1 ist, pro eingesetztem Mol B die Summe der Mole L₁ und L₂ jedoch 2 ist) hergestellt werden können.

Die nach dem erfindungsgemäßen Verfahren hergestellten Hydrogen-bis-(chelato)borate finden Verwendung als protonensaure Katalysatoren in der organischen Chemie und die Alkalimetall-bis(chelato)borate finden Verwendung als Elektrolyte für elektrochemische Speichersysteme.

Die Erfindung wird im folgenden anhand von Beispielen näher erläutert.

### Beispiel 1: Herstellung von Lithium-bis(oxalato)borat im Mischer

In einem halarbeschichteten 2-1-Doppelmantelstahlreaktor mit Ankerrührer, Destillationsbrücke, Innenthermometer und Feststoffdosiereinrichtung wurden 549 g Oxalsäure-Dihydrat (reinst, Firma Merck, 4,36 mol) und 134 g (2,18 mol) gemahlene Borsäure bei Raumtemperatur vorgelegt. Unter langsamem Rühren wurden mittels Dosierbirne 84 g (1,14 mol) Lithiumcarbonat, purissimum innerhalb von ca. 10 min zugegeben. Es entwich ein Gas und das Reaktionsgemisch erhitzte sich auf etwa 27 °C.

Dann wurde die Manteltemperatur langsam (innerhalb 1 Stunde) und unter leichtem Rühren auf 110 °C erhöht und leichtes Vakuum angelegt (Druck im Reaktionsgefäß ca. 800 mbar). Beim Erreichen von etwa 90 °C Innentemperatur begann die Destillation von Wasser. Nachdem der Destillationsvorgang deutlich nachließ (ca. 1,5 Stunden), wurde die Reaktortemperatur zunächst auf 130 und schließlich auf 160 °C erhöht und der Druck weiter gesenkt. Zum Schluß wurde zwei Stunden bei einer Innentemperatur von 145 °C und 15 mbar gerührt.

Nach Abkühlung auf Raumtemperatur wurde der Reaktor entleert.

### Ausbeute: 405 g weißes Pulver mit Schallern (entspricht 96 % der Theorie)

Analyse (mmol/g): B 5,15; Li 5,3; Wasser (nach modifizierter Karl Fischer Methode) 0,4 %; δ¹¹B (Lösung in THF): nur Signal bei 7,6 ppm

### Beispiel 2: Herstellung von Lithium-bis(malonato)borat im Rotavapor

16,75 g (271 mmol) Borsäure und 56,36 g (542 mmol) Malonsäure wurden in einer Reibschale gemeinsam zerrieben und dann in einen 500-ml-Glaskolben überführt. Es wurden 10,00 g Lithiumcarbonat purissimum (135 mmol) zugesetzt und dann unter reduziertem Druck (ca. 900 mbar ) auf 120 °C erhitzt und 1,5 Stunden bei dieser Temperatur gehalten.

Nach dieser Zeit wurde das Vakuum gebrochen und der Kolbeninhalt mittels Mörser zerkleinert. Das pulvrige Produkt wurde in den Kolben zurückgegeben und noch 2,5 Stunden bei 120 °C und Vakuum (zuletzt bei 15 mbar) getrocknet.

### Ausbeute: 57,1 g (entspricht 97 % der Theorie), feinpulvrig, weiß

Analyse (mmol/g): Li 4,50; B 4,80; δ¹¹B (Lösung in DMF): 3,7 ppm

### Beispiel 3: Herstellung von Hydrogen-bis(oxalato)borat im Rotavapor

In einem 500-ml-Glastrockenkolben wurden 40,0 g (647 mmol) gemahlene Borsäure und 163,1 g (1294 mmol) Oxalsäure-Dihydrat eingetragen und zunächst bei Normaldruck erwärmt. Beim Erreichen von etwa 100 °C begann die Mischung zu schmelzen. Bei einer Innentemperatur von 120 °C lag eine klare Schmelze vor, aus der langsam Wasser abdestillierte. Die Destillationsgeschwindigkeit wurde durch Verminderung der Druckes erhöht (zunächst ca. 700 bis 500 mbar Druck im Reaktionsgefäß). Nach ca. 1 Stunde entwich praktisch kein Destillat mehr und der Kolbeninhalt erstarrte zu einer festen, weißen Masse.

Der Destillationsvorgang wurde unterbrochen, das gebildete Wasser ausgewogen (55,2 g) und der Kolbeninhalt mechanisch zerkleinert (Mörser). Das gemahlene Reaktionsgut wurde anschließend in den Kolben zurückgefüllt und wieder erwärmt (135 °C bei ca. 20 mbar). Unter diesen Bedingungen schied sich eine kleinere Menge eines farblosen Sublimates an den kühleren Stellen der Destillationsapparatur ab. Nach ca. zweistündigem Trocknen unter den angegebenen Bedingungen wurde unter trockener Schutzgasatmosphäre abgekühlt.
Ausbeute: 108 g farbloses, kristallines Produkt (89 %)
- Analyse:: B = 5,25 mmol/g
δ¹¹B (Lösung in 1,2-Dimethoxyethan): 7,6 ppm
δ¹H (Lösung in 1,2-Dimethoxyethan): 11,99 ppm
δ¹³C (Lösung in 1,2-DME): 158,85 ppm

### Beispiel 4: Herstellung von Natrium-bis(oxalato)borat im Rotavapor

In einen 1-I-Rundkolben wurden 46,37 g Borsäure (750 mmol), 189,11 g Oxalsäure-Dihydrat (1500 mmol) und 41,73 g Natriumcarbonat (394 mmol) eingewogen und bei einer Badtemperatur von 140 °C und einem Druck im Rundkolben von zunächst 900 mbar einrotiert. Nach einer Stunde kondensierte kein Wasser mehr und der Kolbeninhalt war zu einer festen Masse verbacken. Die Reaktionsmasse wurde aus dem Kolben entfernt, gemörsert und in den Kolben zurückgefüllt. Es wurden noch vier Stunden bei einer Badtemperatur von 140 °C und stufenweise erniedrigtem Druck (zuletzt 20 mbar) getrocknet.
Ausbeute: 152 g (97 %)
Analyse: δ¹¹B (Lösung in N-Methylpyrrolidon): 7,6 ppm

### Beispiel 5: Herstellung von Lithium(malonato,oxalato)borat im Rotavapor

90,05 g Oxalsäure, 104,3 g Malonsäure und 61,8 g Borsäure (je 1 mol) wurden gemörsert und in einen 1-I-Glaskolben gefüllt. Nach Zugabe von 38,1 g (0,516 mol) Lithiumcarbonat wurde die Mischung am Rotationsverdampfer bei einer Ölbadtemperatur von zunächst 100 °C, im weiteren Verlauf bis 120 °C und einem Druck im Glaskolben von 900 mbar erwärmt. Beim Erreichen von 110 °C begann die Mischung, stark zu sieden. Nach zweistündigem Rotieren bei ca. 120 °C und zuletzt 300 mbar erstarrte das Reaktionsgemisch zu einer festen Masse, die nach Abkühlung gemörsert wurde.

Das pulverisierte Produkt wurde dann nochmals bei einer Ölbadtemperatur von 120 °C bei vollem Vakuum (9 mbar) bis zur Gewichtskonstanz getrocknet (3 Stunden).
Ausbeute: 206 g (99,5 %) leicht cremefarbenes Pulver
Analyse: δ¹¹B (THF-Lösung): 7,6 ppm (11 %); 5,5 ppm (71 %); 3,7 ppm (17 %)

Es handelte sich um ein Produktgemisch, das das gemischte Spiroborat mit δ¹¹B = 5,5 ppm als Hauptkomponente enthielt. Dieses konnte durch Umkristallisation in reiner Form erhalten werden.

### Beispiel 6: Herstellung von Lithium(lactato,oxalato)borat im Rotavapor

49,6 g Borsäure (802 mmol) und 80,1 g 90 %-ige wässrige Milchsäurelösung (800 mmol), 100,9 g Oxalsäure-Dihydrat (800 mmol) sowie 33,8 g (806 mmol) Lithiumhydroxid-Monohydrat wurden in einem 1-I-Glaskolben vorgelegt und zunächst 45 Minuten. bei 700 mbar und 110 °C gehalten. Beim Überschreiten von ca. 100 °C bildete sich eine Schmelze/Lösung mit wenig zurückbleibendem Feststoff und Wasser begann zu destillieren. Nach der angegebenen Zeit wurde die Ölbadtemperatur auf 126 °C erhöht und der Druck auf 300 mbar erniedrigt. Nach 60minütigem Rotieren bei diesen Bedingungen erstarrte die Schmelze zu einem klumpigen Feststoff.

Der Trocknungsvorgang wurde unterbrochen, das Reaktionsgemisch gemörsert und das zerkleinerte Produkt dann bei 110 °C und zuletzt 10 mbar 3 Stunden lang endgetrocknet.
Ausbeute: 154,1 g (99 %) cremefarbenes Pulver
- δ¹¹B (DMF-Lösung):: 8,9 ppm (Hauptprodukt)
10,2 ppm (ca. 3 %, Lithium-bis(lactato)borat)
7,5 ppm (ca. 2 %, Lithium-bis(oxalato)borat)
Thermogravimetrie (TGA): Zersetzungsbeginn bei etwa 300 °C

## Patentansprüche

1. Verfahren zur Herstellung von Hydrogen-bis(chelato)boraten der allgemeinen Formel H[BL¹L²] mit
L¹ = -OC(O)-(CR¹R²)ₙ-C(O)O- oder -OC(O)-(CR³R⁴)-O-
mit n = 0 oder 1,
R¹, R², R³, R⁴ = unabhängig voneinander H, Alkyl, Aryl oder Silyl,
L² = -OC(O)-(CR⁵R⁶)ₙ-C(O)O- oder -OC(O)-(CR⁷R⁸)-O-
mit n = 0 oder 1,
R5, R⁶, R⁷, R⁸ = unabhängig voneinander H, Alkyl, Aryl oder Silyl,
**dadurch gekennzeichnet, dass** die Verbindungen
H-OC(O)-(CR¹R²)ₙ-C(O)O-H oder H-OC(O)-(CR³R⁴)-O-H (= H₂L¹) und H-OC(O)-(CR⁵R⁶)ₙ-C(O)O-H oder H-OC(O)-(CR⁷R⁸)-O-H (= H₂L²),
wobei die Ausgangsverbindungen H₂L¹ und H₂L² identisch sein können (dann gilt R¹ = R⁵, R² = R⁶, R³ = R⁷ und R⁴ = R⁸),
mit einer oxidischen Borverbindung ohne den Zusatz von Lösungsmitteln gemischt werden, das heterogene Gemisch zur Reaktion gebracht wird und das eventuell mit den Rohstoffen eingebrachte Wasser und das bei der Reaktion entstehende Wasser entfernt wird.

2. Verfahren nach Anspruch 1, **dadurch gekennzeichnet, dass** Wasser zu dem heterogenen Gemisch der Ausgangsstoffe gegeben wird, wobei die Zugabemenge des Wassers so zu bemessen ist, dass der Gesamtwassergehalt der Synthesemischung (das ist die Summe der mit den Rohstoffen eingebrachten Wassermenge, der Reaktionswassermenge und der zugegebenen Wassermenge) 50 Gew.-% nicht überschreitet.

3. Verfahren nach Anspruch 1 oder 2, **dadurch gekennzeichnet, dass** das Wasser destillativ bei Temperaturen bis 180 °C entfernt wird.

4. Verfahren nach einem der Ansprüche 1 bis 3, **dadurch gekennzeichnet, dass** als oxidische Borverbindung ein Boroxid oder eine Borsäure eingesetzt wird.

5. Verfahren zur Herstellung von Alkalimetall-bis(chelato)boraten der allgemeinen Formel M[BL¹L²] mit
M = Li, Na, K, Rb, Cs
L¹ = -OC(O)-(CR¹R²)ₙ-C(O)O- oder -OC(O)-(CR³R⁴)-O-
mit n = 0 oder 1,
R¹, R², R³, R⁴ = unabhängig voneinander H, Alkyl, Aryl oder Silyl,
L² = -OC(O)-(CR⁵R⁶)ₙ-C(O)O- oder -OC(O)-(CR⁷R⁸)-O-
mit n = 0 oder 1,
R⁵, R⁶, R⁷, R⁸ = unabhängig voneinander H, Alkyl, Aryl oder Silyl,
**dadurch gekennzeichnet, dass**
ein oxidischer Alkalimetallrohstoff
mit H₂L¹ und H₂L² (wobei diese Verbindungen identisch sein können, dann gilt R¹ = R⁵, R² = R⁶, R³ = R⁷ und R⁴ = R⁸) und
mit einer oxidischen Borverbindung ohne den Zusatz von Lösungsmitteln gemischt wird, das heterogene Gemisch zur Reaktion gebracht wird und das eventuell mit den Rohstoffen eingebrachte Wasser und das bei der Reaktion entstehende Wasser entfernt wird.

6. Verfahren nach Anspruch 5, **dadurch gekennzeichnet, dass** Wasser zu dem heterogenen Gemisch der Ausgangsstoffe gegeben wird, wobei die Zugabemenge des Wassers so zu bemessen ist, dass der Gesamtwassergehalt der Synthesemischung (das ist die Summe der mit den Rohstoffen eingebrachten Wassermenge, der Reaktionswassermenge und der zugegebenen Wassermenge) 50 Gew.-% nicht überschreitet.

7. Verfahren nach Anspruch 5 oder 6, **dadurch gekennzeichnet, dass** das Wasser destillativ bei Temperaturen bis 180 °C entfernt wird.

8. Verfahren nach einem der Ansprüche 5 bis 7, **dadurch gekennzeichnet, dass** als oxidische Borverbindung ein Boroxid oder eine Borsäure eingesetzt wird.

9. Verfahren zur Herstellung von Alkalimetall-bis(chelato)boraten der allgemeinen Formel M[BL¹L²] mit
M = Li, Na, K, Rb, Cs
L¹ = -OC(O)-(CR¹R²)ₙ-C(O)O- oder -OC(O)-(CR³R⁴)-O-
mit n = 0 oder 1,
R¹, R², R³, R⁴ = unabhängig voneinander H, Alkyl, Aryl oder Silyl,
L² = -OC(O)-(CR⁵R⁶)ₙ-C(O)O- oder -OC(O)-(CR⁷R⁸)-O-
mit n = 0 oder 1,
R⁵, R⁶, R⁷, R⁸ = unabhängig voneinander H, Alkyl, Aryl oder Silyl,
**dadurch gekennzeichnet, dass** ein Alkalimetallboroxid (Alkalimetallsalz einer Borsäure) mit H₂L¹ und H₂L² (wobei diese Verbindungen identisch sein können, dann gilt R¹ = R⁵, R² = R⁶, R³ = R⁷ und R⁴ = R⁸) ohne den Zusatz von Lösungsmitteln gemischt wird, das heterogene Gemisch zur Reaktion gebracht wird und das eventuell mit den Rohstoffen eingebrachte Wasser und das bei der Reaktion entstehende Wasser entfernt wird.

10. Verfahren nach Anspruch 9, **dadurch gekennzeichnet, dass** Wasser zu dem heterogenen Gemisch der Ausgangsstoffe gegeben wird, wobei die Zugabemenge des Wassers so zu bemessen ist, dass der Gesamtwassergehalt der Synthesemischung (das ist die Summe der mit den Rohstoffen eingebrachten Wassermenge, der Reaktionswassermenge und der zugegebenen Wassermenge) 50 Gew.-% nicht überschreitet.

11. Verfahren nach Anspruch 9 oder 10, **dadurch gekennzeichnet, dass** das Wasser destillativ bei Temperaturen bis 180 °C entfernt wird.

12. Verfahren zur Herstellung von Alkalimetall-bis(chelato)boraten der allgemeinen Formel M[BL¹L²] mit
M = Li, Na, K, Rb, Cs
L¹ = -OC(O)-(CR¹R²)ₙ-C(O)O- oder -OC(O)-(CR³R⁴)-O-
mit n = 0 oder 1,
R¹, R², R³, R⁴ = unabhängig voneinander H, Alkyl, Aryl oder Silyl,
L² = -OC(O)-(CR⁵R⁶)ₙ-C(O)O- oder -OC(O)-(CR⁷R⁸)-O-
mit n = 0 oder 1,
R⁵, R⁶, R⁷, R⁸ = unabhängig voneinander H, Alkyl, Aryl oder Silyl,
**dadurch gekennzeichnet, dass** die Verbindungen M₂L¹ und H₂L² oder die Verbindungen MHL¹ und H₂L² (wobei jeweils L¹ = L² sein kann) mit einer oxidischen Borverbindung ohne den Zusatz von Lösungsmitteln gemischt werden, das heterogene Gemisch zur Reaktion gebracht wird und das eventuell mit den Rohstoffen eingebrachte Wasser und das bei der Reaktion entstehende Wasser entfernt wird.

13. Verfahren nach Anspruch 12, **dadurch gekennzeichnet, dass** Wasser zu dem heterogenen Gemisch der Ausgangsstoffe gegeben wird, wobei die Zugabemenge des Wassers so zu bemessen ist, dass der Gesamtwassergehalt der Synthesemischung (das ist die Summe der mit den Rohstoffen eingebrachten Wassermenge, der Reaktionswassermenge und der zugegebenen Wassermenge) 50 Gew.-% nicht überschreitet.

14. Verfahren nach Anspruch 12 oder 13, **dadurch gekennzeichnet, dass** das Wasser destillativ bei Temperaturen bis 180 °C entfernt wird.

15. Verfahren nach einem der Ansprüche 12 bis 14, **dadurch gekennzeichnet, dass** als oxidische Borverbindung ein Boroxid oder eine Borsäure eingesetzt wird.

## Claims

1. Process for the production of hydrogen-bis(chelato)borates of the general formula H[BL¹L²] where
L¹ = -OC(O)-(CR¹R²)ₙ-C(O)O- or -OC(O)-(CR³R⁴)-O-
where n = 0 or 1,
R¹, R², R³, R⁴ independently of one another denote H, alkyl, aryl or silyl,
L² = -OC(O)-(CR⁵R⁶)ₙ-C(O)O- or -OC(O)-(CR⁷R⁸)-O-
where n = 0 or 1,
R⁵, R⁶, R⁷, R⁸ independently of one another denote H, alkyl, aryl or silyl,
**characterised in that** the compounds
H-OC(O)-(CR¹R²)ₙ-C(O)O-H or H-OC(O)-(CR³R⁴)-O-H (=H₂L¹) and H-OC(O)-(CR⁵R⁶)ₙ-C(O)O-H or H-OC(O)(CR⁷R⁸)-O-H (=H₂L²), wherein the starting compounds H₂L¹ and H₂L² may be identical (in which case R¹ = R⁵, R² = R⁶, R³ = R⁷ and R⁴ = R⁸),
are mixed with an oxidic boron compound, without the addition of solvents, the heterogeneous mixture is reacted, and the water possibly introduced with the raw materials and the water formed during the reaction are removed.

2. Process according to claim 1, **characterised in that** water is added to the heterogeneous mixture of the starting substances, the amount of water that is added being such that the total water content of the synthesis mixture (i.e. the sum total of the amount of water introduced with the raw materials, the amount of water of reaction and the amount of added water) does not exceed 50 wt.%.

3. Process according to claim 1 or 2, **characterised in that** the water is removed by distillation at temperatures up to 180°C.

4. Process according to one of claims 1 to 3, **characterised in that** a boron oxide or a boric acid is used as the oxidic boron compound.

5. Process for the production of alkali-metal-bis(chelato)borates of the general formula M[BL¹L²] where
M = Li, Na, To, Rb, Cs
L¹ = -OC(O)-(CR¹R²)ₙ-C(O)O- or -OC(O)-(CR³R⁴)-O-
where n = 0 or 1,
R¹, R², R³, R⁴ independently of one another denote H, alkyl, aryl or silyl,
L² = -OC(O)-(CR⁵R⁶)ₙ-C(O)O- or -OC(O)-(CR⁷R⁸)-O-
where n = 0 or 1,
R⁵, R⁶, R⁷, R⁸ independently of one another denote H, alkyl, aryl or silyl,
**characterised in that** an oxidic alkali-metal raw material is mixed with H₂L¹ and H₂L² (wherein these compounds may be identical, in which case R¹ = R⁵, R² = R⁶, R³ = R⁷ and R⁴ = R⁸) and with an oxidic boron compound, without the addition of solvents, the heterogeneous mixture is reacted, and the water possibly introduced with the raw materials and the water formed during the reaction are removed.

6. Process according to claim 5, **characterised in that** water is added to the heterogeneous mixture of the starting substances, the amount of added water being such that the total water content of the synthesis mixture (i.e. the sum total of the amount of water introduced with the raw materials, the amount of water of reaction and the amount of added water) does not exceed 50 wt.%.

7. Process according to claim 5 or 6, **characterised in that** the water is removed by distillation at temperatures up to 180°C.

8. Process according to one of claims 5 to 7, **characterised in that** a boron oxide or a boric acid is used as the oxidic boron compound.

9. Process for the production of alkali-metal-bis(chelato)borates of the general formula M[BL¹L²] where M = Li, Na, K, Rb, Cs
L¹ = -OC(O)-(CR¹R²)ₙ-C(O)O- or -OC(O)-(CR³R⁴)-O-
where n = 0 or 1,
R¹, R², R³, R⁴ independently of one another denote H, alkyl, aryl or silyl,
L² = -OC(O)-(CR⁵R⁶)ₙ-C(O)O- or -OC(O)-(CR⁷R⁸)-O-
where n = 0 or 1,
R⁵, R⁶, R⁷, R⁸ independently of one another denote H, alkyl, aryl or silyl,
**characterised in that** an alkali-metal boron oxide (alkali-metal salt of a boric acid) is mixed with H₂L¹ and H₂L² (wherein these compounds may be identical, in which case R¹ = R⁵, R² = R⁶, R³ = R⁷ and R⁴ = R⁸), without the addition of solvents, the heterogeneous mixture is reacted, and the water possibly introduced with the raw materials and the water formed during the reaction are removed.

10. Process according to claim 9, **characterised in that** water is added to the heterogeneous mixture of the starting substances, the amount of water that is added being such that the total water content of the synthesis mixture (i.e. the sum total of the amount of water introduced with the raw materials, the amount of water of reaction and the amount of added water) does not exceed 50 wt.%.

11. Process according to claim 9 or 10, **characterised in that** the water is removed by distillation at temperatures up to 180°C.

12. Process for the production of alkali-metal-bis(chelato)borates of the general formula M[BL¹L²] where
M = Li, Na, K, Rb, Cs
L¹ = -OC(O)-(CR¹R²)ₙ-C(O)O- or -OC(O)-(CR³R⁴)-O-
where n = 0 or 1,
R¹, R², R³, R⁴ independently of one another denote H, alkyl, aryl or silyl,
L² = -OC(O)-(CR⁵R⁶)ₙ-C(O)O- or -OC(O)-(CR⁷R⁸)-O-
where n = 0 or 1,
R⁵, R⁶, R⁷, R⁸ independently of one another denote H, alkyl, aryl or silyl,
**characterised in that** the compounds M₂L¹ and H₂L² or the compounds MHL¹ and H₂L² (wherein in each case L¹ may be identical to L²) are mixed with an oxidic boron compound, without the addition of solvents, the heterogeneous mixture is reacted, and the water possibly introduced with the raw materials and the water formed during the reaction are removed.

13. Process according to claim 12, **characterised in that** water is added to the heterogeneous mixture of the starting substances, the amount of added water being such that the total water content of the synthesis mixture (i.e. the sum total of the amount of water introduced with the raw materials, the amount of water of reaction and the amount of added water) does not exceed 50 wt.%.

14. Process according to claim 12 or 13, **characterised in that** the water is removed by distillation at temperatures up to 180°C.

15. Process according to one of claims 12 to 14, **characterised in that** a boron oxide or a boric acid is used as the oxidic boron compound.

## Revendications

1. Procédé de préparation de bis(chélato)borures d'hydrogène de formule générale H[BL¹L²] dans laquelle :
- L¹ représente un fragment de formule -OC(O)-C(R¹R²)ₙ-C(O)O- ou de formule -OC(O)-C(R³R⁴)-O-,
où l'indice n vaut 0 ou 1 et les symboles R¹, R², R³ et R⁴ représentent chacun, indépendamment les uns des autres, un atome d'hydrogène ou un groupe alkyle, aryle ou silyle,
- et L² représente un fragment de formule -OC(O)-C(R⁵R⁶)ₙ-C(O)O- ou de formule -OC(O)-C(R⁷R⁸)-O-,
où l'indice n vaut 0 ou 1 et les symboles R⁵, R⁶, R⁷ et R⁸ représentent chacun, indépendamment les uns des autres, un atome d'hydrogène ou un groupe alkyle, aryle ou silyle,
**caractérisé en ce que** l'on mélange les composés de formule H-OC(O)-C(R¹R²)ₙ-C(O)O-H ou H-OC(O)-C(R³R⁴)-O-H, soit H₂L¹, et de formule H-OC(O)-C(R⁵R⁶)ₙ-C(O)O-H ou H-OC(O)-C(R⁷R⁸)-O-H, soit H₂L², lesquels composés de départ de formules H₂L¹ et H₂L² peuvent être identiques (R¹ est alors identique à R⁵, R² à R⁶, R³ à R⁷ et R⁴ à R⁸), avec un composé du bore de type oxyde, sans y ajouter de solvant, on fait réagir ce mélange hétérogène, et l'on élimine l'eau éventuellement apportée par les produits de départ et l'eau formée au cours de la réaction.

2. Procédé conforme à la revendication 1, **caractérisé en ce que** l'on ajoute, au mélange hétérogène des produits de départ, de l'eau en une quantité telle que toute l'eau contenue dans le mélange de synthèse, c'est-à-dire le total de l'eau apportée par les produits de départ, de l'eau formée lors de la réaction et de l'eau ajoutée, ne représente pas plus de 50 % du poids du mélange.

3. Procédé conforme à la revendication 1 ou 2, **caractérisé en ce qu'**on élimine l'eau par distillation à des températures allant jusqu'à 180 °C.

4. Procédé conforme à l'une des revendications 1 à 3, **caractérisé en ce qu'**on utilise, en tant que composé du bore de type oxyde, un oxyde de bore ou un acide borique.

5. Procédé de préparation de bis(chélato)borures de métal alcalin de formule générale M[BL¹L²] dans laquelle :
- M représente un atome de lithium, de sodium, de potassium, de rubidium ou de césium,
- L¹ représente un fragment de formule -OC(O)-C(R¹R²)ₙ-C(O)O- ou de formule -OC(O)-C(R³R⁴)-O-,
où l'indice n vaut 0 ou 1 et les symboles R¹, R², R³ et R⁴ représentent chacun, indépendamment les uns des autres, un atome d'hydrogène ou un groupe alkyle, aryle ou silyle,
- et L² représente un fragment de formule -OC(O)-C(R⁵R⁶)ₙ-C(O)O-
ou de formule -OC(O)-C(R⁷R⁸)-O-,
où l'indice n vaut 0 ou 1 et les symboles R⁵, R⁶, R⁷ et R⁸ représentent chacun, indépendamment les uns des autres, un atome d'hydrogène ou un groupe allyle, aryle ou silyle,
**caractérisé en ce que** l'on mélange un produit de départ contentant un métal alcalin, de type oxyde, avec les composés de formule H₂L¹ et de formule H₂L², lesquels composés peuvent être identiques (R¹ est alors identique à R⁵, R² à R⁶, R³ à R⁷ et R⁴ à R⁸), et avec un composé du bore de type oxyde, sans y ajouter de solvant, on fait réagir ce mélange hétérogène, et l'on élimine l'eau éventuellement apportée par les produits de départ et l'eau formée au cours de la réaction.

6. Procédé conforme à la revendication 5, **caractérisé en ce que** l'on ajoute, au mélange hétérogène des produits de départ, de l'eau en une quantité telle que toute l'eau contenue dans le mélange de synthèse, c'est-à-dire le total de l'eau apportée par les produits de départ, de l'eau formée lors de la réaction et de l'eau ajoutée, ne représente pas plus de 50 % du poids du mélange.

7. Procédé conforme à la revendication 5 ou 6, **caractérisé en ce qu'**on élimine l'eau par distillation à des températures allant jusqu'à 180 °C.

8. Procédé conforme à l'une des revendications 5 à 7, **caractérisé en ce qu'**on utilise, en tant que composé du bore de type oxyde, un oxyde de bore ou un acide borique.

9. Procédé de préparation de bis(chélato)borures de métal alcalin de formule générale M[BL¹L²] dans laquelle :
- M représente un atome de lithium, de sodium, de potassium, de rubidium ou de césium,
- L¹ représente un fragment de formule -OC(O)-C(R¹R²)ₙ-C(O)O-
ou de formule -OC(O)-C(R³R⁴)-O-,
où l'indice n vaut 0 ou 1 et les symboles R¹, R², R³ et R⁴ représentent chacun, indépendamment les uns des autres, un atome d'hydrogène ou un groupe alkyle, aryle ou silyle,
- et L² représente un fragment de formule -OC(O)-C(R⁵R⁶)ₙ-C(O)O- ou de formule -OC(O)-C(R⁷R⁸)-O-,
où l'indice n vaut 0 ou 1 et les symboles R⁵, R⁶, R⁷ et R⁸ représentent chacun, indépendamment les uns des autres, un atome d'hydrogène ou un groupe alkyle, aryle ou silyle,
**caractérisé en ce que** l'on mélange un oxyde de bore et de métal alcalin, c'est-à-dire un sel d'un métal alcalin et d'un acide borique, avec les composés de formule H₂L¹ et de formule H₂L², lesquels composés peuvent être identiques (R¹ est alors identique à R⁵, R² à R⁶, R³ à R⁷ et R⁴ à R⁸), sans y ajouter de solvant, on fait réagir ce mélange hétérogène, et l'on élimine l'eau éventuellement apportée par les produits de départ et l'eau formée au cours de la réaction.

10. Procédé conforme à la revendication 9, **caractérisé en ce que** l'on ajoute, au mélange hétérogène des produits de départ, de l'eau en une quantité telle que toute l'eau contenue dans le mélange de synthèse, c'est-à-dire le total de l'eau apportée par les produits de départ, de l'eau formée lors de la réaction et de l'eau ajoutée, ne représente pas plus de 50 % du poids du mélange.

11. Procédé conforme à la revendication 9 ou 10, **caractérisé en ce qu'**on élimine l'eau par distillation à des températures allant jusqu'à 180 °C.

12. Procédé de préparation de bis(chélato)borures de métal alcalin de formule générale M[BL¹L²] dans laquelle :
- M représente un atome de lithium, de sodium, de potassium, de rubidium ou de césium,
- L¹ représente un fragment de formule -OC(O)-C(R¹R²)ₙ-C(O)O- ou de formule -OC(O)-C(R³R⁴)-O-,
où l'indice n vaut 0 ou 1 et les symboles R¹, R², R³ et R⁴ représentent chacun, indépendamment les uns des autres, un atome d'hydrogène ou un groupe alkyle, aryle ou silyle,
- et L² représente un fragment de formule -OC(O)-C(R⁵R⁶)ₙ-C(O)O- ou de formule -OC(O)-C(R⁷R⁸)-O-,
où l'indice n vaut 0 ou 1 et les symboles R⁵, R⁶, R⁷ et R⁸ représentent chacun, indépendamment les uns des autres, un atome d'hydrogène ou un groupe alkyle, aryle ou silyle,
**caractérisé en ce que** l'on mélange les composés de formule M₂L¹ et de formule H₂L², ou les composés de formule MHL¹ et de formule H₂L², où les fragments représentés par L¹ et L² peuvent dans chaque cas être identiques, avec un composé du bore de type oxyde, sans y ajouter de solvant, on fait réagir ce mélange hétérogène, et l'on élimine l'eau éventuellement apportée par les produits de départ et l'eau formée au cours de la réaction.

13. Procédé conforme à la revendication 12, **caractérisé en ce que** l'on ajoute, au mélange hétérogène des produits de départ, de l'eau en une quantité telle que toute l'eau contenue dans le mélange de synthèse, c'est-à-dire le total de l'eau apportée par les produits de départ, de l'eau formée lors de la réaction et de l'eau ajoutée, ne représente pas plus de 50 % du poids du mélange.

14. Procédé conforme à la revendication 12 ou 13, **caractérisé en ce qu'**on élimine l'eau par distillation à des températures allant jusqu'à 180 °C.

15. Procédé conforme à l'une des revendications 12 à 14, **carac-térisé en ce qu'**on utilise, en tant que composé du bore de type oxyde, un oxyde de bore ou un acide borique.
